# EUROPÄISCHE PATENTSCHRIFT

(11) **EP 2 052 995 B1**
(45) Veröffentlichungstag und Bekanntmachung des Hinweises auf die Patenterteilung: **16.12.2009**
(21) Anmeldenummer: 07450212.1
(22) Anmeldetag: 26.11.2007
(51) Int. Cl.: B65G 21/04, B65G 21/22, B65G 39/20, B65G 45/14, B65G 45/16

(54) **Förderanlage zum Transport von Gütern mit einem Förderband**
Supply device for transporting cargo by means of a conveyor belt
Transporteur destiné au transport de marchandises à l'aide d'un transporteur à courroie

(30) Priorität: 22.10.2007 AT 17032007
(43) Veröffentlichungstag der Anmeldung: 29.04.2009
(73) Patentinhaber: Innova Patent GmbH, 6960 Wolfurt (AT)
(72) Erfinder: Berchtold, Thomas, 6867 Schwarzenberg (AT)
(74) Vertreter: Hehenberger, Reinhard

(56) Entgegenhaltungen:
- DE-A1- 2 357 353
- DE-A1- 19 853 519
- DE-C- 493 449
- FR-A- 865 200
- US-B2- 6 588 583

## Beschreibung

Die gegenständliche Erfindung betrifft eine Förderanlage zum Transport von Gütern mit einem Förderband, welches in einer Ladestation und in einer Entladestation der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden seitlichen Enden der Tragbalken jeweils Tragrollen gelagert sind, welche auf zwei längs der Anlage vorgesehenen Paaren von Tragseilen bzw. Tragschienen, die dem vorlaufenden Trum bzw. dem rücklaufenden Trum des Förderbandes zugeordnet sind, abrollen und wobei weiters eine Schableiste od.dgl. zur Reinigung des Förderbandes vorgesehen ist.

Aus der US 6588583 B2 ist eine Förderanlage bekannt, mit welcher mittels Förderbändern, welche mit Wellkanten ausgebildet sind, Güter, wie Abraummaterialien, erzhaltige Mineralien, Kohle u.dgl., aus demjenigen Bereich, in welchem sie anfallen bzw. gewonnen werden, über Hindernisse, wie Täler, hinweg in einen anderen Bereich, in welchem sie gelagert oder verarbeitet werden bzw. aus welchem sie mittels Fahrzeugen wegtransportiert werden, gefördert werden können. Da das Förderband einer derartigen Förderanlage längs Tragseilen geführt wird, können die betreffenden Güter mit vergleichsweise geringem technischen Aufwand von einer Ladestation über weite Strecke zu einer Entladestation gefördert werden.

Bei bekannten derartigen Förderanlagen besteht jedoch die Schwierigkeit, dass in der Entladestation, in welcher das Förderband über eine Umlenktrommel geführt wird, zwar der überwiegende Teil des auf dem Förderband befindlichen Transportgutes von diesem abfällt, dass jedoch in den durch die Tragbalken am Transportband gebildeten, voneinander getrennten muldenartigen Ladebereichen jeweils Anteile des Fördergutes verbleiben, welche beim Rücktransport des Förderbandes entweder von diesem abfallen oder welche auf diesem verbleiben, wodurch sie zur Ladestation zurückgefördert werden.

Um ein Abfallen der am rücklaufenden Trum des Förderbandes verbliebenen Anteile an Fördergut zu vermeiden, da hierdurch Verschmutzungen der unterhalb der Förderanlage befindlichen Bereiche, Objekte u.dgl. verursacht werden, ist es bekannt, nach der Entladestation eine Vorrichtung vorzusehen, durch welche das rücklaufende Trum des Förderbandes nach oben gewendet wird. Dabei ist es jedoch erforderlich, vor der Ladestation eine weitere Vorrichtung vorzusehen, durch welche das rücklaufende Trum wiederum gewendet wird, sodass es über die in der Ladestation befindliche Umlenktrommel geführt und in weiter Folge wieder beladen werden kann.
Eine derartige Wendevorrichtung erfordert jedoch einerseits einen weiteren konstruktiven Aufwand, durch welchen diese Förderanlagen verteuert werden. Andererseits verbleibt bei einer Wendung des rücklaufenden Trumes des Förderbandes die Schwierigkeit, dass die am Förderband verbliebenen Anteile an Fördergut zur Ladestation zurückgefördert werden. Hierdurch wird nicht nur die Förderleistung verringert und wird die erforderliche Antriebsleistung vergrößert, sondern tritt auch der Effekt ein, dass sich über den Verlauf des Förderbetriebes die am rücklaufenden Trum des Förderbandes verbleibenden Anteile an Fördergut vergrößern, wodurch die vorstehend erläuterten nachteiligen Effekte noch verstärkt werden.

Um zu vermeiden, dass sich in der Entladestation am rücklaufenden Trum des Förderbandes mehr und mehr Anteile an Fördergut ansammeln, ist es bekannt, dem Förderband eine Rütteleinrichtung oder eine Spritzeinrichtung zuzuordnen, durch welche Einrichtungen die in der Entladestation am Förderband verbliebenen Anteile an Fördergut entfernt werden. Allerdings wird durch diese Einrichtungen ein großer zusätzlicher konstruktiver Aufwand bedingt und wird weiters durch diese die angestrebte Reinigungswirkung nur unvollständig erzielt. Da das Förderband an der Unterseite von Tragbalken befestigt ist, durch welche es in muldenartige Bereiche unterteilt ist, ist es demgegenüber nicht möglich, das Förderband nach der Entladestation dadurch zu reinigen, dass diesem eine starre Schableiste zugeordnet wird.

Aus der DE 19853519 A1 ist weiters eine Fördereinrichtung mit einem Förderband bekannt, welches mit sog. Mitnehmerleisten ausgebildet ist und welchem eine verstellbare Schableiste zugeordnet ist. Bei dieser bekannten Reinigungseinrichtung läuft die betreffende Mitnehmerleiste auf die Schableiste auf, wodurch diese aus der Bewegungsbahn der Mitnehmerleiste verstellt wird. In der Folge wird die Schableiste unter Wirkung einer Rückstellelfeder wieder an die Oberfläche des Förderbandes zur Anlage gebracht.

Diese bekannte Einrichtung entspricht jedoch deshalb nicht den technischen Erfordernissen, da sie mehrere aneinander verschwenkbar bzw. verschiebbar gelagerte Bauteile aufweist, welche durch die Bewegung der Mitnehmerleisten gegeneinander verstellt werden. Somit liegt eine mechanische Steuerung vor, welche nur bei geringen Geschwindigkeiten des Förderbandes funktionsfähig ist und welche dessen ungeachtet einem starken Verschleiß unterliegt bzw. einer ständigen Wartung bedarf.

Der gegenständlichen Erfindung liegt somit die Aufgabe zugrunde, bei einer Förderanlage zum Transport von Gütern eine wesentlich einfachere und dessen ungeachtet den technischen Erfordernissen entsprechende Reinigungsvorrichtung vorzusehen. Diese Aufgabe wird erfindungsgemäß dadurch gelöst, dass die Schableiste od.dgl. auf einer Welle befestigt ist, die mittels eines Stellmotors gegenüber dem Förderband verschwenkbar ist, wobei der Stellmotor durch die Lage der Tragbalken so gesteuert wird, dass die Schableiste od.dgl. zwischen den Tragbalken an das Förderband zumindest nahezu zur Anlage gebracht wird, wogegen sie im Bereich eines Tragbalkens vom Förderband abgehoben wird.

Vorzugsweise ist eine Rückstellfeder vorgesehen, durch welche die Schableiste, insbesondere bei Ausfall des Stellmotors, vom Förderband weggeschwenkt wird. Weiters ist vorzugsweise der in der Entladestation befindlichen Umlenktrommel mindestens ein Näherungsschalter zugeordnet, durch welchen die Lage eines sich zur Schableiste hinbewegenden Tragbalkens erfassbar ist und durch welchen der Stellmotor steuerbar ist. Weiters ist vorzugsweise die Stelleinrichtung für die Schableiste mit mindestens einem Bruchstab ausgebildet, durch welchen bei einer Fehlfunktion der Stelleinrichtung der Antrieb für die Förderanlage abgeschaltet wird.

Der Gegenstand der Erfindung ist nachstehend anhand eines in der Zeichnung dargestellten Ausführungsbeispieles näher erläutert. Es zeigen:
- FIG.1: eine erfindungsgemäße Förderanlage im Bereich der Entlade- station, in axonometrischer Darstellung;
- FIG.2, FIG.2a, FIG.2b: die erfindungsgemäße Förderanlage im Bereich der Entlade- station, in drei unterschiedlichen Betriebsstellungen, jeweils in Seitenansicht.

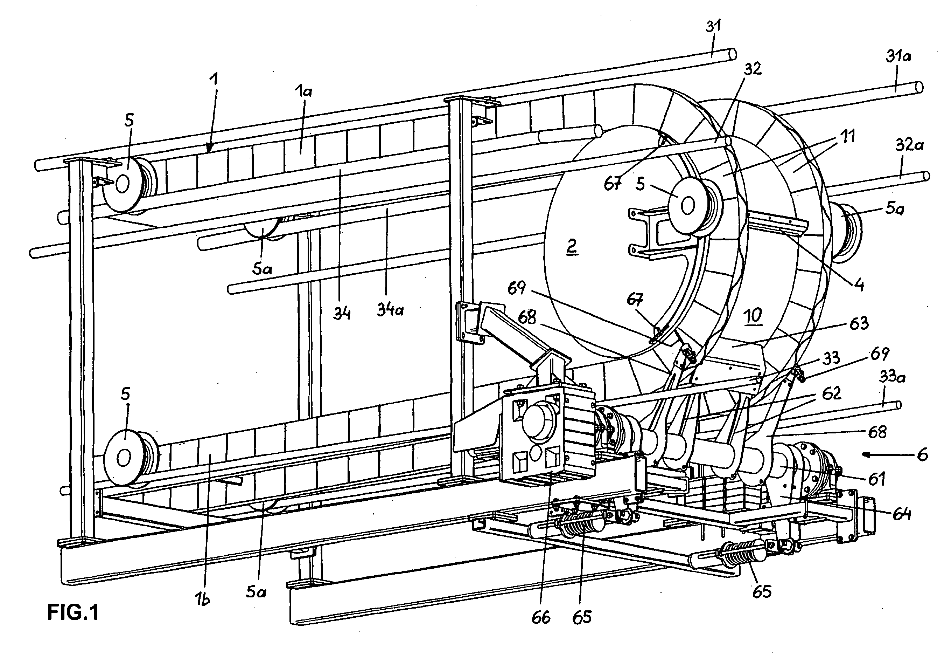

In FIG.1 ist die Entladestation einer Förderanlage für Güter, wie Abraummaterialien, erzhaltige Mineralien, Kohle u.dgl., dargestellt. Die Förderanlage weist ein Förderband 1 auf, welches in der Ladestation und in der Entladestation über Umlenktrommeln geführt ist, wobei mindestens eine dieser Umlenktrommeln angetrieben ist. Das Förderband 1, welches im Querschnitt einen angenähert rechteckigen Förderbereich aufweist, ist seitlich mit Wellkanten 11 ausgebildet, wodurch es in der Ladestation und in der Entladestation über die in diesen befindlichen Umlenktrommeln geführt werden kann. In der Entladestation ist das Förderband über die Umlenktrommel 2 geführt.

Die Förderanlage weist weiters drei Paare von Seilen 31 und 31a, 32 und 32a und 33 und 33a auf, welche längs der gesamten Strecke der Anlage miteinander mittels voneinander im Abstand befindlichen Tragrahmen verbunden sind, wodurch diese Seile über die gesamte Anlage voneinander in den erforderlichen Abständen gehalten sind. Dabei dienen die beiden oberen Seile 31 und 31a als Tragseile der Förderanlage, durch welche die in der Förderanlage auftretenden Belastungen aufgenommen werden. Demgegenüber dienen die beiden mittleren Seile 32 und 32a als Führungsseile für das sich von der Ladestation zur Entladestation bewegende Trum 1a des Förderbandes 1 und dienen die beiden unteren Seile 33 und 33a als Führungsseile für das sich von der Entladestation zur Ladestation zurückbewegende Trum 1b des Förderbandes 1.

Das Förderband 1 ist weiters mit Tragbalken 4 ausgebildet, an deren Unterseiten das Förderband 1 befestigt ist und welche sich voneinander im Abständen von z.B. 5 m bis 8 m befinden. Durch diese Tragbalken 4 ist das Förderband 1 in muldenartige Bereiche unterteilt, wodurch es ermöglicht wird, dieses auch über geneigte Abschnitte der Förderstrecke zu führen, ohne dass hierdurch die auf diesem befindlichen Güter abgleiten. An den beiden Enden der jeweiligen Tragbalken 4 sind Tragrollen 5 und 5a gelagert, wobei die Tragrollen 5 und 5a des sich von der Ladestation zur Entladestation bewegenden Trumes 1a des Förderbandes 1 längs der Führungsseile 32 und 32a abrollen und die Tragrollen 5 und 5a des sich zur Ladestation zurückbewegenden Trumes 1b des Förderbandes 1 längs der Führungsseile 33 und 33a abrollen.

Im Bereich der Entladestation werden die Tragrollen 5 und 5a längs Führungsschienen 34 und 34a geführt. Ebensolche Führungsschienen sind auch in der Ladestation vorgesehen.

In der Entladestation ist dem Förderband 1 eine Schabeinrichtung 6 zugeordnet, welche dazu dient, nach der Entladung des Förderbandes 1 an diesem verbliebene Anteile von Fördergut zu entfernen. Die Schabeinrichtung 6 weist eine Welle 61 auf, welche mit radial abragenden Tragarmen 62 ausgebildet ist, an welchen eine Schableiste 63 od.dgl. befestigt ist. Die Welle 61 ist zudem mit radial abragenden Stellarmen 64 ausgebildet, welche unter der Wirkung von Rückstellfedern 65 stehen, durch welche die Welle 61 auf Verdrehung im Uhrzeigersinn belastet ist, wodurch die Schableiste 63 vom Förderband 1 weggeschwenkt wird. Weiters ist der Welle 61 ein Stellmotor 66 zugeordnet, durch welchen sie derart verdreht wird, dass die Schableiste 63 entgegen der Wirkung der Rückstellfedern 65 zum Förderband 1 hin verschwenkt wird und weiters auch vom Förderband 1 weggeschwenkt wird. Alternativ dazu wird die Schableiste 63 nur durch die Rückstellfedern 65 vom Förderband 1 abgehoben.

Die Steuerung des Stellmotors 66 erfolgt durch Näherungsschalter 67, durch welche jeweils ein im Bereich derselben befindlicher Tragbalken 4 festgestellt wird. Die Ausgangssignale der Näherungsschalter 67 sind an eine Steuereinheit für den Stellmotor 66 gelegt.

Die Wirkungsweise dieser Schabeinrichtung 6 ist wie folgt:

Durch den Stellmotor 66 wird die Schableiste 63 entgegen der Wirkung der Rückstellfedern 65 an die Ladefläche 10 des Förderbandes 1 verschwenkt, wobei es sich zwischen den beiden Wellkanten 11 befindet. Hierdurch wird am Förderband 1 verbliebenes Fördergut von diesem entfernt. Sobald sich der Schableiste 63 ein Tragbalken 4 annähert, wird sie durch den Stellmotor 66 vom Förderband 1 abgeschwenkt. Sofern der Stellmotor 66 funktionsunfähig wird, wird die Schableiste 63 durch die Rückstellfeder 65 vom Förderband 1 abgeschwenkt.

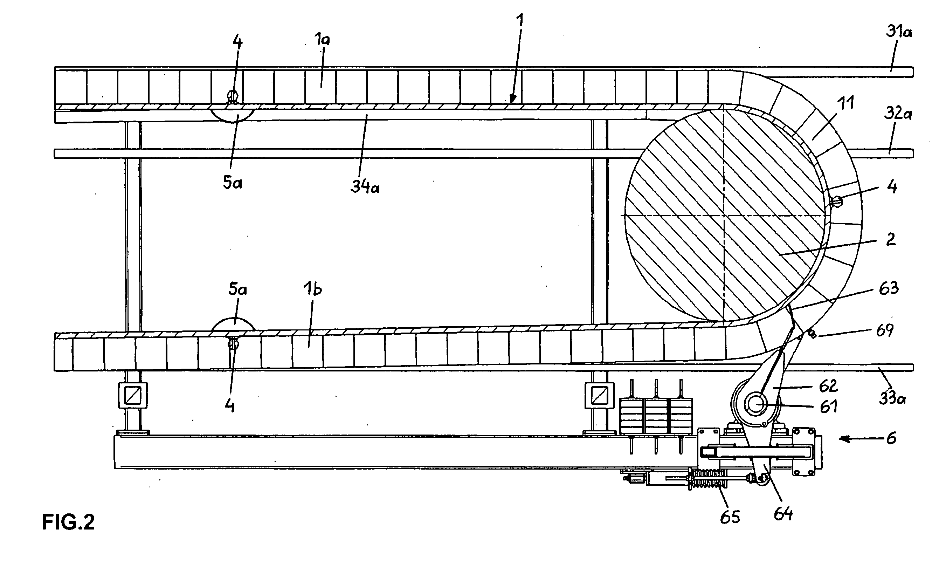

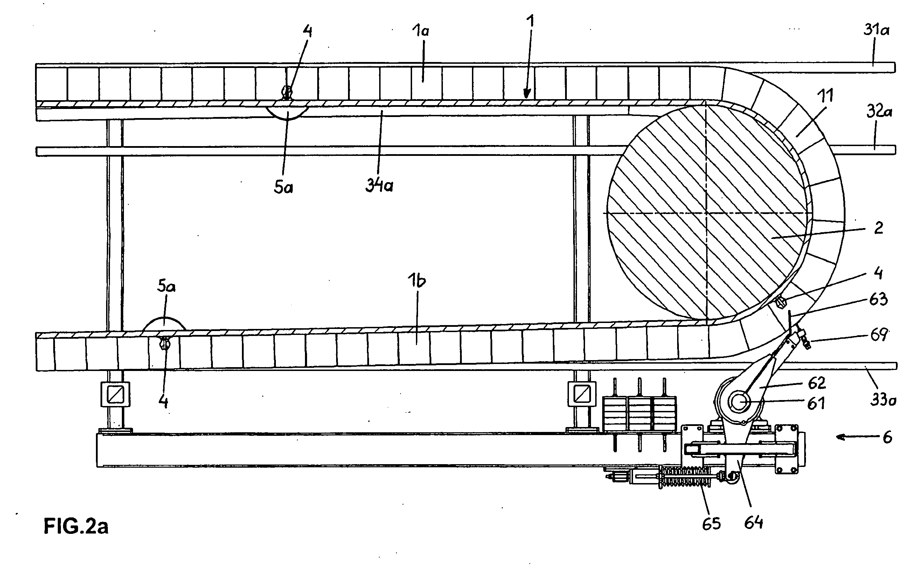

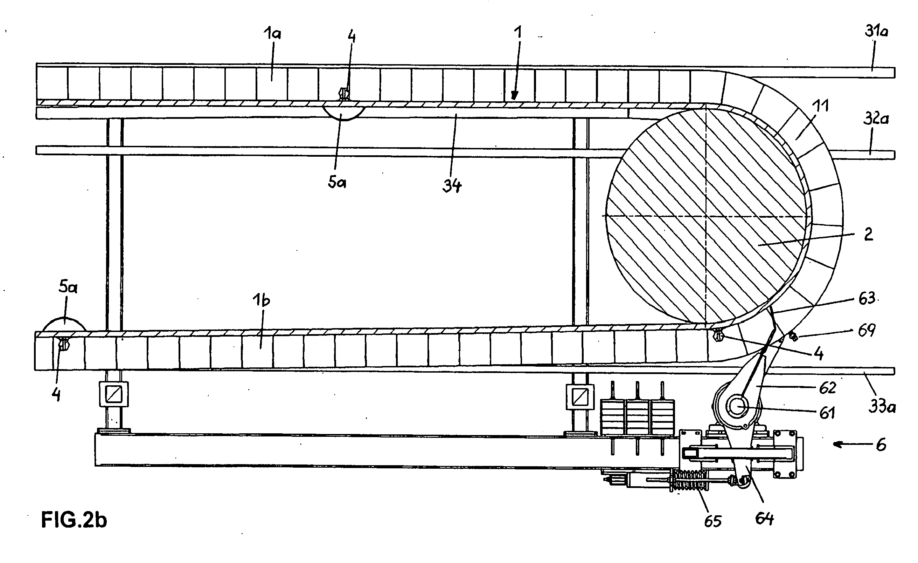

In den FIG.2, 2a und 2b sind drei unterschiedliche Betriebsstellungen der Schableiste 63 dargestellt:
In FIG.2 befindet sich die Schableiste 63 in ihrer zum Förderband 1 hin verschwenkten Stellung, wodurch dieses durch die Schableiste 63 gereinigt wird.
In FIG.2a hat sich ein Tragbalken 4 zur Schableiste 63 hinbewegt, weswegen diese durch den Stellmotor 66 abgehoben worden ist.
In FIG. 2b hat dieser Tragbalken 4 den Bereich der Schableiste 63 verlassen, worauf diese mittels des Stellmotors 66 wiederum zum Förderband 1 hin verschwenkt worden ist.

Auf der Welle 61 befinden sich weiters zwei radiale Tragarme 68 für Bruchstäbe 69, auf welche die Lagerzapfen der Tragrollen 5 und 5a dann auflaufen, wenn infolge einer Fehlfunktion der Stelleinrichtung 65, 66 die für Schableiste 63 diese vom Förderband 1 nicht abgeschwenkt wird, obgleich sich dieser ein Tragbalken 4 annähert. In diesem Fall wird durch die Bruchstäbe 69 der Antrieb für die Förderanlage abgestellt.

## Patentansprüche

1. Förderanlage zum Transport von Gütern mit einem Förderband (1), welches in einer Ladestation und in einer Entladestation der Anlage über Umlenktrommeln (2) geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (4) befestigt ist, wobei an den beiden seitlichen Enden der Tragbalken (4) jeweils Tragrollen (5,5a) gelagert sind, welche auf zwei längs der Anlage vorgesehenen Paaren von Tragseilen bzw. Tragschienen (32,32a, 33,33a, 34,34a), welche dem vorlaufenden Trum (1a) bzw. dem rücklaufenden Trum (1b) des Förderbandes (1) zugeordnet sind, abrollen und wobei weiters eine Schableiste (63) od.dgl. zur Reinigung des Förderbandes (1) vorgesehen ist, **dadurch gekennzeichnet, dass** die Schableiste (63) od.dgl. auf einer Welle (61) befestigt ist, die mittels eines Stellmotors (66) gegenüber dem Förderband (1) verschwenkbar ist, wobei der Stellmotor (66) durch die Lage der Tragbalken (4) so gesteuert wird, dass die Schableiste (63) od.dgl. zwischen den Tragbalken (4) an das Förderband (1) zumindest nahezu zur Anlage gebracht wird, wogegen sie im Bereich eines Tragbalkens (4) vom Förderband (1) abgehoben wird.

2. Förderanlage nach Patentanspruch 1, **dadurch gekennzeichnet, dass** zudem eine Rückstellfeder (65) vorgesehen ist, durch welche die Schableiste (63), insbesondere bei Ausfall des Stellmotors (66), vom Förderband (1) weggeschwenkt wird.

3. Förderanlage nach einem der Patentansprüche 1 und 2, **dadurch gekennzeichnet, dass** der in der Entladestation befindlichen Umlenktrommel (2) mindestens ein Näherungsschalter (67) zugeordnet ist, durch welchen die jeweilige Lage eines sich zur Schableiste (63) hinbewegenden Tragbalkens (4) erfassbar ist und durch welchen der Stellmotor (66) steuerbar ist.

4. Förderanlage nach einem der Patentansprüche 1 bits 3, **dadurch gekennzeichnet, dass** die Stelleinrichtung (65, 66) für die Schableiste (63) mit mindestens einem Bruchstab (69) ausgebildet ist, durch welchen bei einer Fehlfunktion der Stelleinrichtung (65, 66) der Antrieb für die Förderanlage abgeschaltet wird.

## Claims

1. A conveyor system for transporting goods by means of a conveyor belt (1), which is guided in a loading station and in an unloading station of the system via return rollers (2) and which is fastened to the lower side of support beams (4), which are oriented at right angles to the direction of motion of the conveyor belt (1) and which are located at a distance from one another in the direction of motion of the conveyor belt (1), wherein support rollers (5, 5a) are supported in each case at both of the lateral ends of the support beams (4), said support rollers unroll on two pairs of support cables or support rails (32, 32a, 33, 33a, 34, 34a), which are provided along the system and which are assigned to the advancing strand (1a) or to the returning strand (1b) of the conveyor belt (1) and wherein provision is furthermore made for a scraping strip (63) or the like for cleaning the conveyor belt (1), **characterized in that** the scraping strip (63) or the like is fastened to a spindle (61), which can be pivoted relative to the conveyor belt (1) by means of an actuator (66), wherein the actuator (66) is controlled through the layer of the support beams (4) in such a manner that the scraping strip (63) or the like between the support beams (4) is at least nearly moved up against the conveyor belt (1), whereas said scraping strip or the like is lifted from the conveyor belt (1) in the area of a support beam (4).

2. The conveyor system according to patent claim 1, **characterized in that** provision is furthermore made for a return spring (65), by means of which the scraping strip (63) is pivoted away from the conveyor belt (1), in particular in response to a failure of the actuator (66).

3. The conveyor system according to one of patent claims 1 or 2, **characterized in that** at least one proximity switch (67), by means of which the respective location of a support beam (4), which moves towards the scraping strip (63), can be detected and by means of which the actuator (66) can be controlled, is assigned to the return roller (2), which is located in the unloading station.

4. The conveyor system according to one of patent claims 1 to 3, **characterized in that** the control device (65, 66) for the scraping strip (63) is embodied with at least one break stick (69), by means of which the drive for the conveyor system is turned off in response to a malfunction of the control device (65, 66).

## Revendications

1. Dispositif de transport pour le transport de biens, avec une bande transporteuse (1) guidée par des poulies de renvoi (2) dans une station de chargement et une station de déchargement du dispositif, et fixée au côté inférieur de poutres de support (4) orientées perpendiculairement au sens de déplacement de la bande transporteuse (1) et espacées les unes des autres dans le sens de déplacement de la bande transporteuse (1), des rouleaux porteurs (5, 5a) étant respectivement montés aux deux extrémités latérales des poutres de support (4), roulant sur deux paires de câbles de support ou de rails de support (32, 32a, 33, 33a, 34, 34a) prévues dans la longueur du dispositif, qui sont attribuées au brin aller (1a) ou au brin retour (1b) de la bande transporteuse (1), dans lequel est également prévue une baguette de raclage (63) ou autre pour le nettoyage de la bande transporteuse (1), **caractérisé en ce que** la baguette de raclage (63) ou autre est fixée sur un arbre (61) susceptible d'être basculé par rapport à la bande transporteuse (1) au moyen d'un servomoteur (66), le servomoteur (66) étant commandé de telle manière par la position des poutres de support (4), que la baguette de raclage (63) ou autre s'applique au moins presque entre les poutres de support (4) sur la bande transporteuse (1), en étant ainsi levée de la bande transporteuse (1) dans la région d'une poutre de support (4).

2. Dispositif de transport selon la revendication 1, **caractérisé en ce qu'**il est en outre prévu un ressort de rappel (65) permettant de faire pivoter la baguette de raclage (63) à distance de la bande transporteuse (1), en particulier en cas de panne du servomoteur (66).

3. Dispositif de transport selon l'une des revendications 1 et 2, **caractérisé en ce qu'**à la poulie de renvoi (2) située dans la station de déchargement est attribué au moins un détecteur de proximité (67) permettant de détecter les différentes positions d'une poutre de support (4) se déplaçant vers la baguette de raclage (63) et de commander le servomoteur (66).

4. Dispositif de transport selon l'une des revendications 1 à 3, **caractérisé en ce que** le dispositif de réglage (65, 66) destiné à la baguette de raclage (63) est conçu avec au moins une barrette cassante (69) permettant d'arrêter l'entraînement du dispositif de transport en cas de défaillance du dispositif de réglage (65, 66).
